# EUROPÄISCHE PATENTANMELDUNG

(11) **EP 2 196 719 A2**
(43) Veröffentlichungstag der Anmeldung: **16.06.2010**
(21) Anmeldenummer: 09176636.0
(22) Anmeldetag: 20.11.2009
(51) Int. Cl.: F16L 43/00, F16L 55/033, F15D 1/04

(54) **Strömungsoptimierter Rohrkrümmer**

(30) Priorität: 12.12.2008 DE 102008054595
(71) Anmelder: BSH Bosch und Siemens Hausgeräte GmbH, 81739 München (DE)
(72) Erfinder: Meisel, Ingo, 79809, Weilheim (DE)

(57) **Zusammenfassung**

Die vorliegende Erfindung betrifft einen Rohrkrümmer zur Aufnahme einer Strömung und Strömungslenkung mit einer Änderung der Strömungsrichtung und/oder Umformung der Querschnittsform des Rohrkrümmers dadurch gekennzeichnet, dass der Rohrkrümmer eine dem folgenden Kriterium gehorchende Formgebung aufweist, wobei gilt:
a) µ = u̅ β mit u̅ als mittlere Strömungsgeschwindigkeit der Strömung durch den Rohrkrümmer und β als geometrische Kenngröße des Rohrkrümmers, und/oder
b) v = u̅ φ mit u̅ wie bereits genannt und φ als weitere geometrische Kenngröße des Rohrkrümmers. Desweiteren betrifft die vorliegende Erfindung die Verwendung eines erfindungsgemäßen Rohrkrümmers in einem Ausblaskanal einer Dunstabzugshaube, ein Verfahren zum Auslegen eines Rohrkrümmers sowie einen nach dem erfindungsgemäßen Verfahren hergestellten Rohrkrümmer.

## Beschreibung

Die vorliegende Erfindung betrifft einen Rohrkrümmer zur Aufnahme einer Strömung und Strömungslenkung mit einer Änderung der Strömungsrichtung und/oder Umformung der Querschnittsform des Rohrkrümmers. Desweiteren betrifft die vorliegende Erfindung ein Verfahren zum Auslegen eines Rohrkrümmers zur Aufnahme einer Strömung und Strömungslenkung mit einer Änderung der Strömungsrichtung und/oder Umformung der Querschnittsform des Rohrkrümmers, die Verwendung eines erfindungsgemäßen Rohrkrümmers in einem Ausblaskanal einer Dunstabzugshaube sowie einen nach dem erfindungsgemäßen Verfahren hergestellten Rohrkrümmer.

Es ist bekannt, dass durch geeignete Formgebung für entsprechende als Rohrkrümmer bezeichnete Bauteile und strömungstechnisch günstige Ausgestaltung derselben eine Verringerung des Druckverlustes in einer Verrohrung, die mindestens einen Rohrkrümmer als Bestandteil der Verrohrung aufweist, erreicht werden kann. Die Verrohrungen können beispielsweise für Dunstabzugshauben in Küchen, sowohl für Abluft-Dunstabzüge wie auch für Umluft-Dunstabzüge mit rauminterner Teil-Luftführung, eingesetzt werden.

Die Druckschrift DE 20 2005 017 821 U1 offenbart Führungselemente für eine strömungstechnisch günstige Ausgestaltung eines Rohrbogens, die im Inneren eines Rohrbogens angebracht und elliptisch geformt sind. Ebenso offenbart das Dokument GB-A-700 615 Leiteinrichtungen für die Strömung im Inneren einer Verrohrung. Die Druckschrift DE 691 08 881 T2 befasst sich mit der Formgebung der Innenseite einer Wand eines Rohrkrümmers bzw. mit fest mit der Innenwand verbundenen Leiteinrichtungen.

Desweiteren ist es bekannt, dass die Verrohrungen insbesondere von Abluft-Dunstabzügen, aber auch von teilverrohrten Umluft-Dunstabzügen aufgrund der Vielfalt der baulichen Gegebenheiten in ihrer Druckverlust-Charakteristik stark schwanken. Dies bedingt, dass sich in jeder Kücheninstallation ein etwas anderer Betriebspunkt des Dunstabzugs, z.B. hinsichtlich der Lüfterdrehzahl, des Luftvolumenstroms und/oder des Geräuschniveaus einstellt. Diese Streuung im Betriebsverhalten ist unerwünscht. Gegenmaßnahmen zielen darauf ab, den Gesamt-Druckverlust einer Verrohrung möglichst gering zu halten, um so den Leistungseinbruch eines Dunstabzugs trotz baulicher Unwägbarkeiten zu minimieren.

Der sich aufbauende Gesamt-Druckverlust hängt bekanntlich u.a. vom Querschnitt der Verrohrung und der daraus resultierenden, mittleren Durchströmungsgeschwindigkeit ab, aber auch davon, wie strömungsgünstig oder -ungünstig einzelne Kernkomponenten gestaltet sind. Dabei ist die Gestaltung des oder der Rohrkrümmer, die in eine Verrohrung eingebaut werden und Teil dieser Verrohrung sind, von besonderer Bedeutung. Der Strömungswiderstand eines Rohrkrümmers wird im Wesentlichen durch seine äußere Formgebung und innere Gestaltung, z.B. durch den Einbau von Leit- und/oder Umlenkblechen bestimmt. Für die äußere Formgebung sind Merkmale wie z.B. die Überströmung scharfer Kanten entscheidend, wobei scharfe Kanten sich nachteilig, also Druckverlust erhöhend, auswirken, sanfte Übergänge hingegen in der Regel einen deutlich verminderten Druckverlustanstieg mit sich bringen. Diese Zusammenhänge liegen in dem Auftreten von Strömungsablösungen, das für scharfe Kanten und abrupte Umlenkunkungen und Umformungen bekanntlich in erhöhtem Ausmaß auftritt.

Die Druckschrift DE 20 2005 017 821 U1 befasst sich zum Teil mit diesen Grundsätzen und versucht den Druckverlustanstieg durch die Verwendung von Leitblechen zu begrenzen.

Der vorliegenden Erfindung liegt die Aufgabe zugrunde, einen strömungsoptimierten Rohrkrümmer und ein Verfahren zur Auslegung eines solchen zur Verfügung zu stellen, der bei gleichen Umlenkungs- und/oder Umformungsanforderungen einen im Vergleich zum Stand der Technik geringeren Druckverlust aufweist.

Die gestellte Aufgabe wird vorrichtungsseitig dadurch gelöst, dass der Rohrkrümmer eine dem folgenden Kriterium gehorchende Formgebung aufweist, wonach für eine strömungstechnische Kenngröße µ Werte aus dem Bereich von 0 bis 8000 mit einer Einheit von [°/sec] und für eine strömungstechnische Kenngröße v Werte aus dem Bereich von -4000 bis +2000 mit einer Einheit von [%/sec] vorgesehen sind, wobei gilt:
a) µ= u̅ β mit u̅ als mittlere Strömungsgeschwindigkeit der Strömung durch den Rohrkrümmer und β als geometrische Kenngröße des Rohrkrümmers mit β= α/ s₁ [°/mm] zur Bezeichnung des Ausmaßes der Strömungsumlenkung in eine andere Strömungsrichtung, wobei ein Winkel α einfließt, den die Flächennormalen der Eintritts- und Austrittsflächen eines umlenkungsrelevanten Bereiches aufspannen, sowie die mittlere Lauflänge der Umlenkung s₁ einfließt, und/oder
b) v= u̅ ϕ mit u̅ wie bereits genannt und ϕ als geometrische Kenngröße des Rohrkrümmers mit ϕ= σ/s₂ [%/mm] zur Bezeichnung des Ausmaßes der Querschnittsumformung, wobei als Querschnittsflächenänderung σ=-100(Aₛ - A_{z})/ Aₛ [%] gilt mit Aₛ als Start-Querschnittsfläche und A_{z} als Ziel-Querschnittsfläche der Querschnittsumformung und s₂ die mittlere Lauflänge der Umformung bezeichnet.

Die Ausgestaltung eines erfindungsgemäßen Rohrkrümmers genügt damit dem folgenden Grundprinzip: Es wird versucht, die Außenkontur zu optimieren, soweit das im Rahmen des zur Verfügung stehenden Platzangebots möglich ist. Angestrebt wird eine möglichst sanfte Umlenkung der Strömung ohne allzu abrupte, lokale Richtungsänderungen, wie sie z.B. durch scharfe Kanten hervorgerufen werden.

Rohrkrümmer, welche entweder nur eine Umformung der Rohrform, z.B. von rund auf rechteckig, oder zusätzlich auch eine Umlenkung der Strömung in eine andere Strömungsrichtung vornehmen, lassen der Strömung erfindungsgemäß genügend Lauflänge, um die vorgegebenen Form- und/oder Richtungsänderungen ohne Ausbildung von oder mit lediglich sehr geringer Strömungsablösung vollziehen zu können. Damit wird vorteilhaft eine Verringerung des Druckverlustes erreicht.

Die genannten Maßnahmen lassen sich durch die bereits oben genannten mathematischen Begrifflichkeiten ausdrücken. Im Folgenden sollen die Beziehungen nochmal ausführlich dargelegt werden: Scharfe Kanten sind gekennzeichnet durch ein besonders kleines Verhältnis ρ = R/R* des lokalen Krümmungsradius R an der inneren Wandung eines Krümmerbauteils zu einem Referenzradius R*. Der Referenzradius R* wird in geeigneter Weise aus der globalen Geometrie des Rohrkrümmers abgeleitet, so dass die charakteristischen Krümmungen des Bauteils im Mittel gut repräsentiert werden. Beispielsweise kann als Referenzradius der Krümmungsradius der der inneren Wandung gegenüberliegenden, äußeren Wandung des Rohrkrümmers gewählt werden. Das Verhältnis ρ sollte den Wert 0,1 nicht unterschreiten.

Das Ausmaß der Strömungsumlenkung in eine andere Strömungsrichtung ist ebenfalls von Einfluß auf die strömungstechnische Qualität der Geometrie des Rohrkrümmers. Zur Quantifizierung dient ein Winkel α, welcher in geeigneter Weise aus der Stellung der Eintritts- und der Austrittsfläche des umlenkungsrelevanten Bereiches zueinander abgeleitet wird. Der umlenkungsrelevante Bereich ist definiert als der räumliche Anteil des Rohrkrümmers, innerhalb dessen im Wesentlichen die Strömungsumlenkung stattfindet. So bietet sich für die Wahl von α beispielsweise der Winkel an, den die Flächennormalen der Eintritts- und der Austrittsfläche des umlenkungsrelevanten Bereiches aufspannen. Zur Quantifizierung dient weiterhin eine mittlere Lauflänge der Umlenkung s₁, welche die Strömung von Beginn bis Ende der Richtungsänderung zurücklegt. Die mittlere Lauflänge der Umlenkung s₁ ist definiert als die Länge der geometrischen Mittellinie des Rohrkrümmers, von der Eintrittsfläche bis zur Austrittsfläche des umlenkungsrelevanten Bereiches. Die charakteristische Kenngröße β zur Beurteilung des Ausmaßes der Strömungsumlenkung wird hierbei als β = α/s₁ mit der Einheit [°/mm] angegeben.

Das Ausmaß einer Querschnittsumformung, z.B. von rund auf rechteckig oder umgekehrt, zusätzlich zur Strömungsumlenkung lässt sich anhand der geometrischen Eigenschaften der beiden Querschnittsformen Start-Querschnittsform und Ziel-Querschnittsform bemessen. So ist eine Querschnittsform im Wesentlichen charakterisiert durch ihre Querschnittsfläche A und ihre Umfangslänge U, wobei der durch die Querschnittsumformung verursachte Druckverlust durch die Änderung der Querschnittsfläche dominiert wird. Der Einfluß der Umfangslängenänderung ist ungeordnet und erfährt daher im Folgenden keine weitere Berücksichtigung.

Die Querschnittsflächenänderung σ = -100(Aₛ - A_{z})/ Aₛ mit der Einheit [%] betrachtet die Änderung der Querschnittsfläche ausgehend von der Start-Querschnittsfläche Aₛ hin zur Ziel-Querschnittsfläche A_{z}. Ein negatives σ bedeutet eine Querschnittsverengung, die eine Strömungsbeschleunigung zur Folge hat und grundsätzlich wegen der Vermeidung von Strömungsablösungen kleinere Druckverluste verursacht. Ein positives σ bedeutet eine Querschnittserweiterung und folglich eine Verzögerung der Strömung, was diese anfälliger für Strömungsablösungen macht und in der Folge einen erhöhten Druckverlust verursachen kann.

Zu einer bewertbaren Kenngröße wird σ aber erst durch den Bezug auf den umformungsrelevanten Bereich des Rohrkrümmers, bzw. auf die mittlere Lauflänge der Umformung s₂, welche die Strömung von Beginn bis Ende der Querschnittsumformung zurücklegt. Somit wird für das Ausmaß einer Querschnittsumformung das Verhältnis ϕ = σ/S₂ mit der Einheit [%/mm] definiert. Genauso wie σ wird ϕ für eine Querschnittsverengung negativ und für eine Querschnittserweiterung positiv.

Die Kenngrößen β und ϕ charakterisieren die Geometrie eines Rohrkrümmers. Zur Bewertung bezüglich des Druckverlustes muss zusätzlich berücksichtigt werden, dass dieser von der mittleren Strömungsgeschwindigkeit u̅ durch den Rohrkrümmer abhängt. Dabei wird u̅ bestimmt, indem der für die Auslegung des Rohrkrümmers vorgesehene Volumenstrom Ċ mit der Einheit [m³/h] auf die mittlere Querschnittsfläche A̅ [mm²] des Krümmerbauteils bezogen wird und somit u̅ = 10⁶ Ċ / 3.6 A̅ mit der Einheit [mm/sec] und mit A̅ = (Aₛ + A_{z})/2.

Damit können die geometrischen Kenngrößen β und ϕ mit u̅ verknüpft werden, um die strömungstechnischen Kenngrößen µ = u̅ β und v = u̅ ϕ zu erhalten, mit den Einheiten [°/sec] und [%/sec]. Analog zu σ und ϕ wird v für eine Querschnittsverengung negativ, und für eine Querschnittserweiterung positiv. Die Größen µ und v lassen sich anschaulich als "Umlenkungsgeschwindigkeit" und "Umformungsgeschwindigkeit" interpretieren und dienen erfindungsgemäß als Auslegungskriterien, wobei µ einen Wert von 8000°/sec nicht überschreiten und v einen Wert von -4000%/sec nicht unter- und einen Wert von +2000%/sec nicht überschreiten soll.

Gemäß einer vorteilhaften Weiterbildung der Erfindung sind im Inneren des Rohrkrümmers zusätzlich Strömungsleitbleche und/oder Einrichtungen zur Strömungsumlenkung vorgesehen. In manchen Fällen ist es möglich durch Leit- oder Umlenkeinrichtungen, wie z.B. durch Strömungsleitbleche im Inneren eines Strömungskanals die Strömung weiter in der Änderung ihrer Querschnittsform und/oder ihrer Strömungsrichtung zu unterstützen. Besonders für den Fall, dass die Möglichkeiten zur Minimierung des Druckverlustes durch die Optimierung der Außenkontur des Rohrkrümmers als ausgereizt angesehen werden, lässt sich der Druckverlust in manchen Fällen durch die Beeinflussung der Kerndurchströmung durch Einbauten weiter verringern. Hierzu kommen in der Regel Leit- oder Umlenkbleche im Inneren des Rohrkrümmers zur Anwendung.

Ebenfalls Gegenstand der vorliegenden Erfindung ist die Verwendung eines erfindungsgemäßen Rohrkrümmers in einem Ausblaskanal einer Dunstabzugshaube. Bei diesem Anwendungsgebiet trifft, wie schon eingangs genannt, ein oftmals geringes Platzangebot mit notwendigen Änderungen der Strömungsrichtung mit hohen Anforderungen an die Leistung und an ein angenehm leises Betriebsgeräusch zusammen, wodurch die Verwendung der vorliegenden Erfindung hier besonders vorteilhaft ist.

Verfahrensseitig wird die gestellte Aufgabe dadurch gelöst, dass der Rohrkrümmer gemäß dem folgenden Kriterium ausgelegt wird, wonach für eine strömungstechnische Kenngröße µ Werte aus dem Bereich von 0 bis 8000 mit einer Einheit von [°/sec] und für eine strömungstechnische Kenngröße v Werte aus dem Bereich von -4000 bis +2000 mit einer Einheit von [%/sec] eingestellt werden, wobei gilt:
a) µ = u̅ β mit u̅ als mittlere Strömungsgeschwindigkeit der Strömung durch den Rohrkrümmer und β als geometrische Kenngröße des Rohrkrümmers mit β = α / s₁ [°/mm] zur Bezeichnung des Ausmaßes der Strömungsumlenkung in eine andere Strömungsrichtung, wobei ein Winkel α einfließt, den die Flächennormalen der Eintritts- und Austrittsflächen eines umlenkungsrelevanten Bereiches aufspannen, sowie die mittlere Lauflänge der Umlenkung s₁ einfließt, und/oder
b) v = u̅ ϕ mit u̅ wie bereits genannt und ϕ als geometrische Kenngröße des Rohrkrümmers mit ϕ= σ / s₂ [%/mm] zur Bezeichnung des Ausmaßes der Querschnittsumformung, wobei als Querschnittsflächenänderung σ = -100(Aₛ - A_{z})/ Aₛ gilt mit Aₛ als Start-Querschnittsfläche und A_{z} als Ziel-Querschnittsfläche der Querschnittsumformung und s₂ die mittlere Lauflänge der Umformung bezeichnet.

Gemäß einer vorteilhaften Weiterbildung der Erfindung werden bei der Auslegung zusätzliche Strömungsleitbleche und/oder Einrichtungen zur Strömungsumlenkung im Inneren des Rohrkrümmers berücksichtigt.

Desweiteren ist ein Rohrkrümmer, der nach einem Verfahren gemäß den vorstehend genannten Verfahrensansprüchen hergestellt wurde, Gegenstand der vorliegenden Erfindung.

Die vorliegende Erfindung bietet eine ganze Reihe weiterer Vorteile, von denen im Folgenden nur einige wenige nochmal genannt sind: Durch konsequente Anwendung der genannten Maßnahmen und Berücksichtigung der genannten Auslegungskriterien lässt sich systematisch eine Verringerung des Druckverlustes gegenüber herkömmlichen, nicht oder nicht ausreichend optimierten Rohrkrümmern erreichen. Durch die Verwendung solch optimierter Rohrkrümmer sinkt der Gesamt-Druckverlust einer Verrohrung, die mindestens einen solchen Rohrkrümmer umfasst, was sich z.B. günstig auf den sich einstellenden Betriebspunkt eines Dunstabzugs auswirkt, dessen Ausblaskanal mindestens einen solchen Rohrkrümmer als Teil der Verrohrung des Ausblaskanals aufweist. Ein günstiger Betriebspunkt eines Dunstabzugs zeichnet sich gegenüber einem ungünstigen Betriebspunkt durch eine geringere Leistungsaufnahme, einen größeren Luftvolumenstrom und/oder ggf. einen geringeren Geräuschpegel aus.

Die Erfindung sowie weitere Ausgestaltungen der Erfindung werden im Folgenden anhand der in den Figuren dargestellten Ausführungsbeispiele näher erläutert. Es zeigen:
- Figur 1: eine Schnittdarstellung eines erfindungsgemäßen Rohrkrümmers,
- Figur 2: eine Schnittdarstellung entlang A - A (vgl. Figur 1),
- Figur 3: eine Schnittdarstellung entlang B - B (vgl. Figur 1).

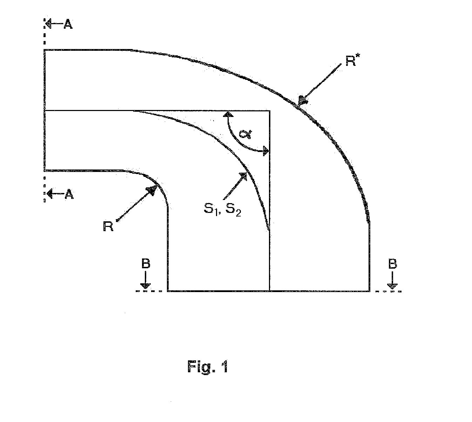

Im Einzelnen zeigt die Figur 1 einen Schnitt durch einen Rohrkrümmer mit einem lokalen Krümmungsradius R an der inneren Wandung des Rohrkrümmers zu einem Referenzradius R*. Der Referenzradius R* wird in geeigneter Weise aus der globalen Geometrie des Rohrkrümmers abgeleitet, so dass die charakteristischen Krümmungen des Bauteils im Mittel gut repräsentiert werden. In diesem Beispiel wird als Referenzradius R* der Krümmungsradius R* der äußeren Wandung des Rohrkrümmers gewählt, die der inneren Wandung des Rohrkrümmers gegenüberliegt.

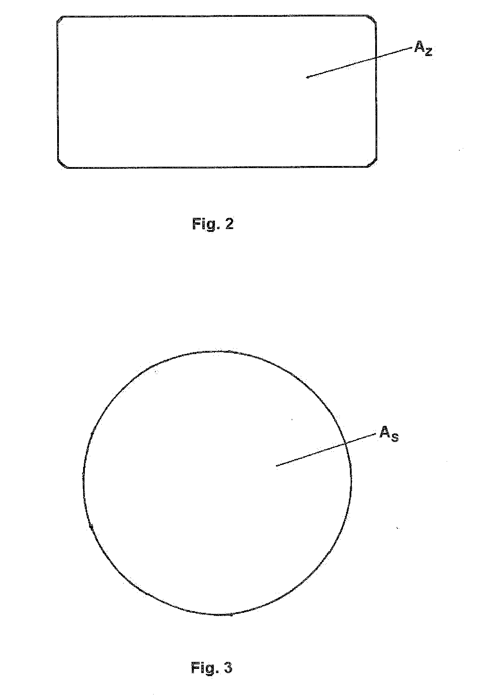

Desweiteren zeigt die Figur 1 einen Winkel α, der zur Quantifizierung des Ausmaßes der Strömungsumlenkung in eine andere Strömungsrichtung dient und welcher in geeigneter Weise aus der Stellung der Eintritts- und der Austrittsfläche (s. Figur 2 und 3) des umlenkungsrelevanten Bereiches zueinander abgeleitet wird. Der umlenkungsrelevante Bereich ist definiert als der räumliche Anteil des Rohrkrümmers, innerhalb dessen im Wesentlichen die Strömungsumlenkung stattfindet. In diesem Beispiel wird für den Winkel α der Winkel gewählt, den die Flächennormalen der Eintritts- und der Austrittsfläche des umlenkungsrelevanten Bereiches aufspannen.

Zur Quantifizierung des Ausmaßes der Strömungsumlenkung in eine andere Strömungsrichtung dient weiterhin eine mittlere Lauflänge der Umlenkung s₁, welche die Strömung von Beginn bis Ende der Richtungsänderung zurücklegt. Die mittlere Lauflänge der Umlenkung s₁, ist in diesem Beispiel definiert als die Länge der geometrischen Mittellinie des Rohrkrümmers, von der Eintrittsfläche bis zur Austrittsfläche des umlenkungsrelevanten Bereiches, wobei die Schnittebene des Schnitts A - A die Austrittsfläche repräsentiert und die Schnittebene des Schnitts B - B die Eintrittsfläche, entsprechend des Aus- und Eintritts der Strömung in den Rohrkrümmer.

Zusätzlich wird eine mittlere Lauflänge für die Umformung s₂ definiert, welche die Strömung von Beginn bis Ende einer Querschnittsumformung zurücklegt.

Die Zusammenschau der Figuren 1 bis 3 ermöglicht zu erkennen, dass in diesem Beispiel eine Querschnittsumformung von rund auf rechteckig vorgesehen ist. Selbstverständlich behalten die hier angegebenen Auslegungskriterien ihre Gültigkeit, für den Fall, dass eine umgekehrte Querschnittsumformung stattfindet, z.B. von eckig auf rund oder zwischen zwei beliebigen anderen Querschnittsformen.

Die Figur 2 zeigt die rechteckige Austrittsfläche A_{z} des Rohrkrümmers. Die Figur 3 zeigt die runde Eintrittsfläche Aₛ des Rohrkrümmers.

Durch die Querschnittsumformung wird ein Druckverlust verursacht, der durch das Ausmaß der Änderung der Querschnittsfläche ausgehend von der auch als Start-Querschnittsfläche bezeichneten Eintrittsfläche Aₛ hin zu einer auch als Ziel-Querschnittsfläche bezeichneten Austrittsfläche A_{z} bestimmt wird.

## Patentansprüche

1. Rohrkrümmer zur Aufnahme einer Strömung und Strömungslenkung mit einer Änderung der Strömungsrichtung und/oder Umformung der Querschnittsform des Rohrkrümmers **dadurch gekennzeichnet, dass** der Rohrkrümmer eine dem folgenden Kriterium gehorchende Formgebung aufweist, wonach für eine strömungstechnische Kenngröße µ Werte aus dem Bereich von 0 bis 8000 mit einer Einheit von [°/sec] und für eine strömungstechnische Kenngröße v Werte aus dem Bereich von -4000 bis +2000 mit einer Einheit von [%/sec] vorgesehen sind, wobei gilt:
a) µ = u̅ β mit u̅ als mittlere Strömungsgeschwindigkeit der Strömung durch den Rohrkrümmer und β als geometrische Kenngröße des Rohrkrümmers mit β = α / s₁ [°/mm] zur Bezeichnung des Ausmaßes der Strömungsumlenkung in eine andere Strömungsrichtung, wobei ein Winkel α einfließt, den die Flächennormalen der Eintritts- und Austrittsflächen eines umlenkungsrelevanten Bereiches aufspannen, sowie die mittlere Lauflänge der Umlenkung s₁ einfließt, und/oder
b) v = u̅ ϕ mit u̅ wie bereits genannt und ϕ als geometrische Kenngröße des Rohrkrümmers mit ϕ= σ / s₂ [%/mm] zur Bezeichnung des Ausmaßes der Querschnittsumformung, wobei als Querschnittsflächenänderung σ = -100(Aₛ - A_{z})/ Aₛ [%] gilt mit Aₛ als Start-Querschnittsfläche und A_{z} als Ziel-Querschnittsfläche der Querschnittsumformung und s₂ die mittlere Lauflänge der Umformung bezeichnet.

2. Rohrkrümmer nach Anspruch 1, **dadurch gekennzeichnet, dass** im Inneren des Rohrkrümmers zusätzlich Strömungsleitbleche und/oder Einrichtungen zur Strömungsumlenkung vorgesehen sind.

3. Verwendung eines Rohrkrümmers nach Anspruch 1 oder 2 in einem Ausblaskanal einer Dunstabzugshaube.

4. Verfahren zum Auslegen eines Rohrkrümmers zur Aufnahme einer Strömung und Strömungslenkung mit einer Änderung der Strömungsrichtung und/oder Umformung der Querschnittsform des Rohrkrümmers **dadurch gekennzeichnet, dass** der Rohrkrümmer gemäß dem folgenden Kriterium ausgelegt wird, wonach für eine strömungstechnische Kenngröße µ Werte aus dem Bereich von 0 bis 8000 mit einer Einheit von [°/sec] und für eine strömungstechnische Kenngröße v Werte aus dem Bereich von -4000 bis +2000 mit einer Einheit von [%/sec] eingestellt werden, wobei gilt:
a) µ = u̅ β mit u̅ als mittlere Strömungsgeschwindigkeit der Strömung durch den Rohrkrümmer und β als geometrische Kenngröße des Rohrkrümmers mit β = α / s₁ [°/mm] zur Bezeichnung des Ausmaßes der Strömungsumlenkung in eine andere Strömungsrichtung, wobei ein Winkel α einfließt, den die Flächennormalen der Eintritts- und Austrittsflächen eines umlenkungsrelevanten Bereiches aufspannen, sowie die mittlere Lauflänge der Umlenkung s₁ einfließt, und/oder
b) v = u̅ ϕ mit u̅ wie bereits genannt und ϕ als geometrische Kenngröße des Rohrkrümmers mit ϕ= σ / s₂ [%/mm] zur Bezeichnung des Ausmaßes der Querschnittsumformung, wobei als Querschnittsflächenänderung σ = -100(Aₛ - A_{z})/ Aₛ [%] gilt mit Aₛ als Start-Querschnittsfläche und A_{z} als Ziel-Querschnittsfläche der Querschnittsumformung und s₂ die mittlere Lauflänge der Umformung bezeichnet.

5. Verfahren nach Anspruch 4, **dadurch gekennzeichnet, dass** bei der Auslegung zusätzliche Strömungsleitbleche und/oder Einrichtungen zur Strömungsumlenkung im Inneren des Rohrkrümmers berücksichtigt werden.

6. Rohrkrümmer hergestellt nach einem Verfahren nach Anspruch 4 oder 5.
